# EUROPÄISCHE PATENTSCHRIFT

(11) **EP 3 529 567 B1**
(45) Veröffentlichungstag und Bekanntmachung des Hinweises auf die Patenterteilung: **04.11.2020**
(21) Anmeldenummer: 17764606.4
(22) Anmeldetag: 11.09.2017
(51) Int. Cl.: G01F 1/66, H04R 17/00, G01F 15/00

(54) **CLAMP-ON-ULTRASCHALLSENSOR ZUR VERWENDUNG BEI EINEM ULTRASCHALL-DURCHFLUSSMESSGERÄT UND EIN ULTRASCHALL-DURCHFLUSSMESSGERÄT**
CLAMP-ON ULTRASONIC SENSOR FOR USE IN AN ULTRASONIC FLOW RATE MEASURING DEVICE, AND ULTRASONIC FLOW RATE MEASURING DEVICE
CAPTEUR À ULTRASONS À CLAMPER DESTINÉ À UN DÉBITMÈTRE À ULTRASONS ET DÉBITMÈTRE À ULTRASONS

(30) Priorität: 19.10.2016 DE 102016119910
(43) Veröffentlichungstag der Anmeldung: 28.08.2019
(73) Patentinhaber: Endress+Hauser Flowtec AG, 4153 Reinach (CH)
(72) Erfinder: WIEST, Achim, 79576 Weil am Rhein (DE); GRUNWALD, Sascha, 79585 Steinen (DE)
(74) Vertreter: Andres, Angelika Maria
(86) Internationale Anmeldenummer: PCT/EP2017/072754
(87) Internationale Veröffentlichungsnummer: WO 2018/072926

(56) Entgegenhaltungen:
- EP-A1- 2 770 305
- EP-A2- 1 235 056
- EP-A2- 2 338 047
- WO-A1-02/45074
- GB-A- 2 363 455
- JP-A- S6 128 821
- US-A- 6 065 350

## Beschreibung

Die Erfindung betrifft einen Clamp-On-Ultraschallsensor zur Verwendung bei einem Ultraschall-Durchflussmessgerät zur Messung der Durchflussgeschwindigkeit oder dem Volumendurchfluss von Medien in einem Messrohr, wobei der Clamp-On-Ultraschallsensor dazu eingerichtet ist, Lambwellen-Moden in einer Messrohrwand zu erzeugen und zu erfassen, wobei die Lambwellen-Moden das Abstrahlen von Ultraschallsignalen in das Messrohr verursachen und wobei die Lambwellen-Moden durch durch das Messrohr laufende und bei der Messrohrwand eintreffende Ultraschallsignale hervorgerufen werden.

Die Erzeugung und Erfassung von Lambwellen-Moden ist bereits Stand der Technik, wie beispielsweise gezeigt in den Patentschriften US6575043B1 und US4735095B.

Jedoch ist die Effizienz der Erzeugung vom Lambwellen-Moden durch einen Clamp-On-Ultraschallsensor in einer Messrohrwand abhängig von der Wellenlänge oder dem Wellenlängenbereich eines durch den Clamp-On-Ultraschallsensor erzeugten Ultraschallsignals, von der geometrischen und materiellen Beschaffenheit des Messrohrs und von der geometrischen Ausgestaltung eines Kontaktbereichs zwischen Messrohr und Clamp-On-Ultraschallwandler. Das hat zur Folge, dass Clamp-On-Ultraschallsensoren, welche dazu eingerichtet sind, Lambwellen-Moden in der Messrohrwand zu erzeugen, nicht beliebig bei verschiedenen Messrohren eingesetzt werden können. Jeder Messrohrtyp benötigt einen speziell angepassten Clamp-On-Ultraschallsensor, um eine hohe Effizienz zu ermöglichen

Aufgabe der Erfindung ist es daher, einen effizient koppelnden Clamp-On-Ultraschallsensor vorzuschlagen, welcher insbesonders flexibel an unterschiedlichen Messrohrtypen eingesetzt werden kann.

Die Erfindung wird gelöst durch einen Clamp-On-Ultraschallsensor gemäß dem unabhängigen Anspruch 1.

Der erfindungsgemäße Clamp-On-Ultraschallsensor zur Verwendung bei einem Ultraschall-Durchflussmessgerät zur Messung der Durchflussgeschwindigkeit oder dem Volumendurchfluss von Medien in einem Messrohr, umfasst
mindestens ein Wandlerelement zum Erzeugen und/oder Detektieren von Ultraschallsignalen;
und mindestens einen akustischen Übertrager, welcher dazu eingerichtet ist, die Ultraschallsignale zwischen einer Messrohrwandung und Wandlerelement in der Weise zu übertragen, dass ein Ultraschallsignal in der Messrohrwandung als mindestens eine Lambwellen-Mode ausgebildet ist,
wobei ein Ultraschallsignal in der Messrohrwandung als mindestens eine Lambwellen-Mode ausgebildet ist,
wobei der akustische Übertrager auf einer zum Messrohr gewandten Seite eine geometrische Struktur aufweist, welche dazu eingerichtet ist,
ein Ultraschallsignal im Übertrager in ein Ultraschallsignal in der Messrohrwandung zu wandeln und/oder
ein Ultraschallsignal in der Messrohrwandung in ein Ultraschallsignal im Übertrager zu wandeln,
wobei der akustische Übertrager mindestens einen Ultraschallsignalleiter und mindestens ein Koppelelement aufweist,
wobei der Ultraschallsignalleiter und das Koppelement lösbar mechanisch verbunden sind,
und wobei der Ultraschallsignalleiter mit dem Wandlerelement akustisch gekoppelt ist,
und wobei das Koppelelement die geometrische Struktur aufweist und dazu eingerichtet ist, mit dem Messrohr akustisch gekoppelt zu werden.

Das Wandlerelement ist somit austauschbar, der Clamp-On-Ultraschallsensor kann für den Einsatz an unterschiedlichen Messrohren und für die Messung der Durchflussgeschwindigkeit oder dem Volumendurchfluss von Medien unterschiedlicher akustischer Impedanz und damit unterschiedlicher Schallgeschwindigkeit angepasst werden.

In einer Ausgestaltung des Clamp-On-Ultraschallsensors umfasst der Clamp-On-Ultraschallsensor des Weiteren ein Gehäuse mit mindestens einer Gehäusekammer, in welcher Gehäusekammer das Wandlerelement angeordnet ist.

In einer Ausgestaltung des Clamp-On-Ultraschallsensors umfasst der Clamp-On-Ultraschallsensor des Weiteren eine Haltevorrichtung, welche dazu eingerichtet ist, das Gehäuse beziehungsweise das Wandlerelement am Messrohr lösbar zu befestigen.

Erfindungsgemäß weist die geometrische Struktur mindestens zwei Vorsprünge auf, wobei in Richtung einer Messrohrachse benachbarte Vorsprünge einen Abstand zueinander aufweisen, welcher Abstand hinsichtlich des Wellenlängenbereichs der Ultraschallsignale und/oder hinsichtlich der Messrohrgeometrie und/oder der Materialbeschaffenheit des Messrohrs zur Verbesserung der Koppeleigenschaften des Koppelelements optimiert ist. Ein Lambwellen-Mode in der Messrohrwand ist durch räumlich verteilte Schwingungsmaxima und Schwingungsminima der Messrohrwand charakterisiert. Für eine optimale Anregung eines Lambwellen-Modes müssen die Abstände zwischen den Vorsprüngen den Abständen der Schwingungsmaxima entsprechen. Ein Ultraschallsensor, der ein Koppelelement mit Vorsprünge aufweist, ist in Dokument EP 1 235 056 A2 offenbart.

In einer Ausgestaltung des Clamp-On-Ultraschallsensors weist das Koppelelement eine Grundfläche und eine Höhe auf, wobei das Quadrat der Höhe kleiner als 10% der Grundfläche ist, wobei das Quadrat der Höhe insbesondere kleiner als 5% der Grundfläche ist, und wobei das Quadrat der Höhe insbesondere kleiner als 2% der Grundfläche ist. Das Koppelelement ist somit im Wesentlichen scheibenförmig. Die Grundfläche ist gegeben durch die maximale orthogonale Projektion des Koppelelements auf eine Ebene, die Höhe ist gegeben durch die maximale Erstreckung senkrecht dazu.

In einer Ausgestaltung des Clamp-On-Ultraschallsensors folgt der Kontaktbereich zwischen der geometrischen Struktur und dem Messrohr im Wesentlichen einer Geraden. Das folgt daraus, dass eine bis auf die Aussparungen ebene Kontaktfläche des Koppelelements auf der zylindrischen Mantelfläche des Messrohrs aufliegt.

In einer Ausgestaltung des Clamp-On-Ultraschallsensors ist zwischen dem Koppelelement und dem Messrohr und/oder zwischen dem Koppelement und dem Ultraschallsignalleiter und/oder zwischen dem Wandlerelement und dem Ultraschallsignalleiter jeweils eine Schicht angeordnet, welche eine angepasste Übertragungsfunktion für das Ultraschallsignal aufweist. Die Schicht kann beispielsweise durch Impedanzanpassung die Transmission eines Ultraschallsignals zwischen den jeweiligen Elementen erhöhen.

In einer Ausgestaltung des Clamp-On-Ultraschallsensors ist das Koppelelement am Gehäuse und/oder an der Haltevorrichtung ausrichtbar. Beispielsweise kann das Koppelement mindestens eine Nut aufweisen, in welche eine Nase des Gehäuses bzw. der Haltevorrichtung hineingreift.

In einer Ausgestaltung des Clamp-On-Ultraschallsensors ist das Gehäuse an der Haltevorrichtung ausrichtbar. Das kann über eine Nut und eine Nase erfolgen, oder über einen elastischen Einrastmechanismus.

In einer Ausgestaltung des Clamp-On-Ultraschallsensors verursacht ein Erzeugen der mindestens einen Lambwellen-Mode in der Messrohrwandung eine Ultraschallsignalabstrahlung in das Messrohr, wobei die Abstrahlung mindestens eine bevorzugte Abstrahlrichtung aufweist, welche Abstrahlrichtung einen Winkel (β) kleiner als 90° und insbesondere kleiner als 70° und bevorzugt kleiner als 60° zur Messrohrachse aufweist.

In einer Ausgestaltung des Clamp-On-Ultraschallsensors ist das Koppelelement am Ultraschallsignalleiter befestigbar und wechselbar; und wobei eine Befestigung mindestens ein Element aus der folgenden Liste umfasst:
Klettverbindung, lösbare Klebverbindung, Flügelmutter mit Schraubverbindung, Schnappverbindung, Rändelmutter mit Schraubverbindung, Klemmverbindung, Fettverbindung oder Silikonfilm basierend auf Adhäsionskraft, Magnetverbindung.

Durch eine einfache Auswechselbarkeit des Koppelelements wird der Einsatz des Clamp-On-Ultraschallsensors an verschiedenen Messrohrtypen ermöglicht, da nur ein an den jeweiligen Messrohrtyp angepasstes Koppelelement ausgewählt und in den Clamp-On-Ultraschallsensor eingesetzt werden muss.

In einer Ausgestaltung des Clamp-On-Ultraschallsensors ist mindestens ein Element aus folgender Liste gegen Manipulation versiegelbar:
akustischer Übertrager, Wandlerelement, Gehäuse, Haltevorrichtung.

Ein erfindungsgemäßes Ultraschall-Durchflussmessgerät zur Messung der Durchflussgeschwindigkeit oder dem Volumendurchfluss von Medien in einem Messrohr nach dem Laufzeitdifferenzen-Messprinzip umfasst ein Messrohr mit einer Messrohrachse;
zwei erfindungsgemäße Clamp-On-Ultraschallsensoren nach mindestens einem der welche am Messrohr angeordnet sind;
und eine Mess-/Betriebselektronik, welche dazu eingerichtet ist, die Clamp-On-Ultraschallsensoren zu betreiben.

In einer Ausgestaltung des Ultraschall-Durchflussmessgeräts ist ein erster Clamp-On-Ultraschallsensor gegenüber einem zweiten Clamp-On-Ultraschallsensor entlang einer Messrohrachse versetzt angeordnet,
wobei in einem ersten/zweiten Bereich der Messrohrwandung das Erzeugen der mindestens einen Lambwellen-Mode in der Messrohrwandung durch den ersten/zweiten Clamp-On-Ultraschallsensor eine Ultraschallsignalabstrahlung in das Messrohr verursacht, wobei die Abstrahlung mindestens eine bevorzugte Abstrahlrichtung aufweist,
wobei eine erste Abstrahlrichtung des ersten Bereichs zum zweiten Bereich gerichtet ist, und wobei eine erste Abstrahlrichtung des zweiten Bereichs zum ersten Bereich gerichtet ist,
wobei ein Signalpfad zwischen dem ersten Bereich und dem zweiten Bereich mindestens eine Messrohrtraverse aufweist.

Ein erfindungsgemäßes Ultraschall-Durchflussmessgerät zur Messung der Durchflussgeschwindigkeit oder dem Volumendurchfluss von Medien in einem Messrohr nach dem Doppler-Messprinzip umfasst ein Messrohr mit einer Messrohrachse;
mindestens einen erfindungsgemäßen Clamp-On-Ultraschallsensor, welcher am Messrohr angeordnet ist;
und eine Mess-/Betriebselektronik, welche dazu eingerichtet ist, den Clamp-On-Ultraschallsensor zu betreiben,
wobei in einem dritten Bereich der Messrohrwandung das Erzeugen der mindestens einen Lambwellen-Mode in der Messrohrwandung durch den Clamp-On-Ultraschallsensor eine Ultraschallsignalabstrahlung in das Messrohr verursacht, wobei die Abstrahlung mindestens eine bevorzugte Abstrahlrichtung aufweist.

Ein erfindungsgemäßer Clamp-On-Ultraschallsensor weist üblicherweise zwei Abstrahlrichtungen auf, welche im Wesentlichen symmetrisch um eine senkrecht zur Messrohrachse verlaufenden Linie angeordnet sind. Bei den erfindungsgemäßen Ultraschall-Durchflussmessgeräten, welche nach dem Laufzeit- oder Laufzeitdifferenzenprinzip arbeiten, werden nur die Ultraschallsignale einer Abstrahlrichtung eines Clamp-On-Ultraschallsensors zur Durchflussmessung verwendet.

Im Folgenden wird die Erfindung anhand von Ausführungsbeispielen erläutert.
Fig. 1 zeigt einen Querschnitt durch ein Ausführungsbeispiel eines erfindungsgemäßen Clamp-On-Ultraschallsensors.
Fig. 2 zeigt einen Querschnitt durch ein Ausführungsbeispiel eines erfindungsgemäßen Clamp-On-Ultraschallsensors.
Fig. 3 zeigt drei Ansichten eines Ausführungsbeispiels eines erfindungsgemäßen Koppelelements 40, wobei Fig. 3 a) eine Aufsicht auf eine geometrische Struktur des Koppelelements 40 zeigt, wobei Fig. 3 b) eine Seitenansicht auf das Koppelelement zeigt, und wobei Fig. 3 c) eine Aufsicht auf einer der in Fig. 3 a) gezeigten geometrischen Struktur gegenüberliegenden Seite zeigt.
Fig. 4 zkizziert schematisch die Abstrahlung eines Ultraschallsignals in das Messrohr.
Fig. 5 zeigt ein Ultraschall-Durchflussmessgerät mit zwei erfindungsgemäßen Clamp-On-Ultraschallsensoren, welches nach dem Laufzeit- oder Laufzeitdifferenzenprinzip arbeitet.
Fig. 6 zeigt ein Ultraschall-Durchflussmessgerät mit einem erfindungsgemäßen Clamp-On-Ultraschallsensor, welches nach dem Dopplerprinzip arbeitet.

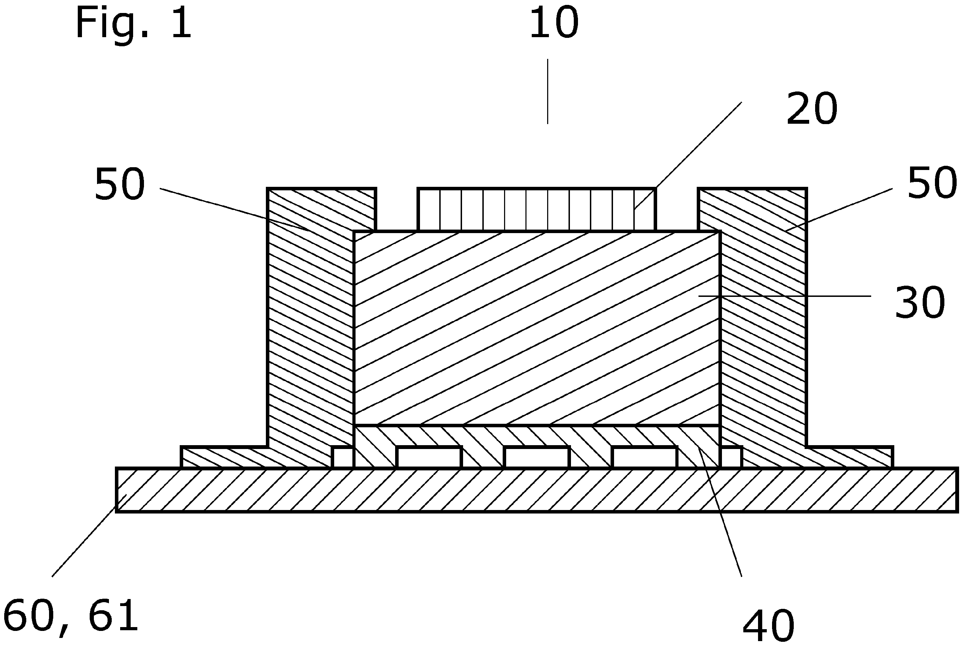

Fig. 1 zeigt einen Querschnitt durch einen erfindungsgemäßen Clamp-On-Ultraschallsensor 10, welcher ein Wandlerelement 20, einen Ultraschallsignalleiter 30, ein Koppelelement 40 und eine Haltevorrichtung 50 aufweist, wobei die Haltevorrichtung 50 dazu eingerichtet ist, das Wandlerelement, den Ultraschallsignalleiter und das Koppelelement an einer Messrohrwand 61 eines Messrohrs 60 zu befestigen. Das Wandlerelement ist dazu eingerichtet, zwischen elektrischen Signalen und Ultraschallsignalen zu wandeln. Das Wandlerelement kann beispielsweise ein piezoelektrisches Element sein. Ein vom Wandlerelement erzeugtes Ultraschallsignal wird in den Ultraschallsignalleiter 30 eingekoppelt und läuft zum Koppelelement 40, wo es über eine Grenzfläche Koppelelement - Messrohrwand mittels des Koppelelements mindestens eine Lambwellen-Mode in der Messrohrwand ausbildet, welche Lambwellen-Mode die Abstrahlung des Ultraschallsignals in das Messrohr 60 verursacht. Umgekehrt wird eine durch ein das Messrohr durchlaufendes Ultraschallsignal erzeugte Lambwellen-Mode über das Koppelelement in den Ultraschallsignalleiter eingekoppelt, welcher Ultraschallsignalleiter 30 das Ultraschallsignal zum Wandlerelement 20 leitet, welches Wandlerelement das Ultraschallsignal in ein elektrisches Signal wandelt. Die Haltevorrichtung 50 kann beispielsweise einen mit der Messrohrwand in Kontakt stehenden Fuß aufweisen, so dass der Clamp-On-Ultraschallwandler mittels eines um das Messrohr 60 gelegten Spannbandes am Messrohr befestigt werden kann. Das Koppelelement 40 und/oder der Ultraschallsignalleiter 30 können jeweils mindestens eine Nut (nicht gezeigt) aufweisen, so dass das Koppelelement bzw. der Ultraschallsignalleiter über mindestens eine Nase der Haltevorrichtung (nicht gezeigt) ausgerichtet werden kann.

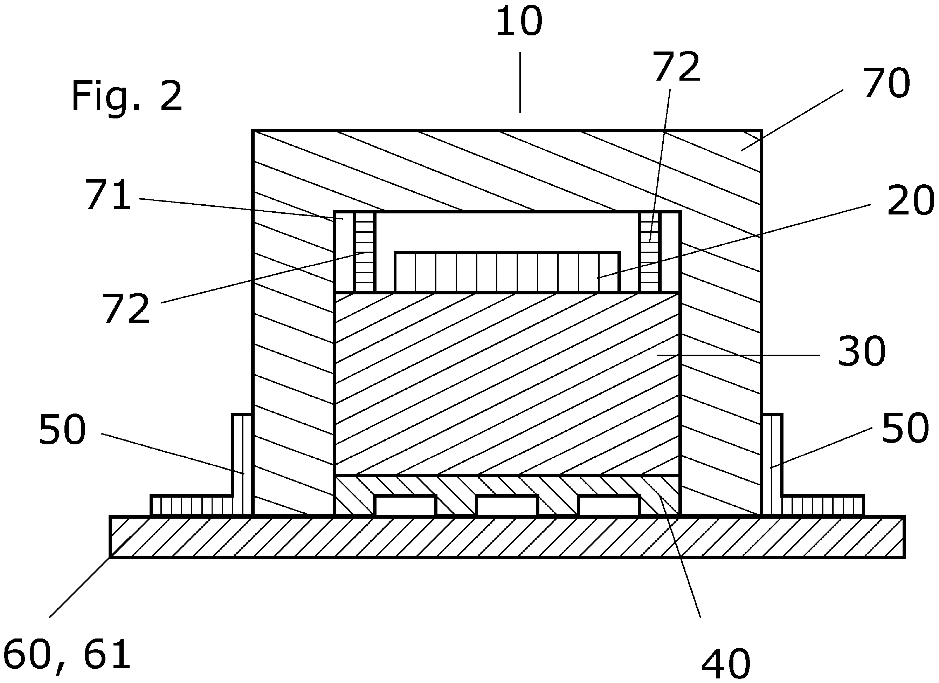

Fig. 2 zeigt einen Querschnitt durch einen erfindungsgemäßen Clamp-On-Ultraschallsensor 10, wobei der Clamp-On-Ultraschallsensor zuzüglich zum in Fig. 1 gezeigten Clamp-On-Ultraschallsensor 10 ein Gehäuse 70 mit einer Gehäusekammer 71 aufweist, in welcher Gehäusekammer 71 das Wandlerelement 20, der Ultraschallsignalleiter 30 sowie das Koppelelement 40 angeordnet sind und durch das Gehäuse 70 vollständig von der Umgebung abschirmt werden, so dass elektrische Störsignale aus der Umgebung keinen Einfluss auf den Ultraschallsensor 10 haben. Im Gegensatz zu den in Fig. 1 gezeigten Clamp-On-Ultraschallsensor kann hier das Gehäuse mindestens eine Nase (nicht gezeigt) aufweisen, über welche Nase das Koppelelement 40 und/oder der Ultraschallsignalleiter 30 über eine Nut (nicht gezeigt) ausrichtbar sind. Wie in Fig. 2 gezeigt, kann ein Federmechanismus 72 dazu eingerichtet sein, den Ultraschallsignalleiter 30 und das Koppelelement 40 gegenüber dem Gehäuse 70 gegen die Messrohrwand 61 zu drücken. Der in Fig. 1 und in Fig. 2 gezeigte Ultraschallsignalleiter 30 kann dabei aus einem Metall, einem Kunststoff oder einer Keramik gefertigt sein.

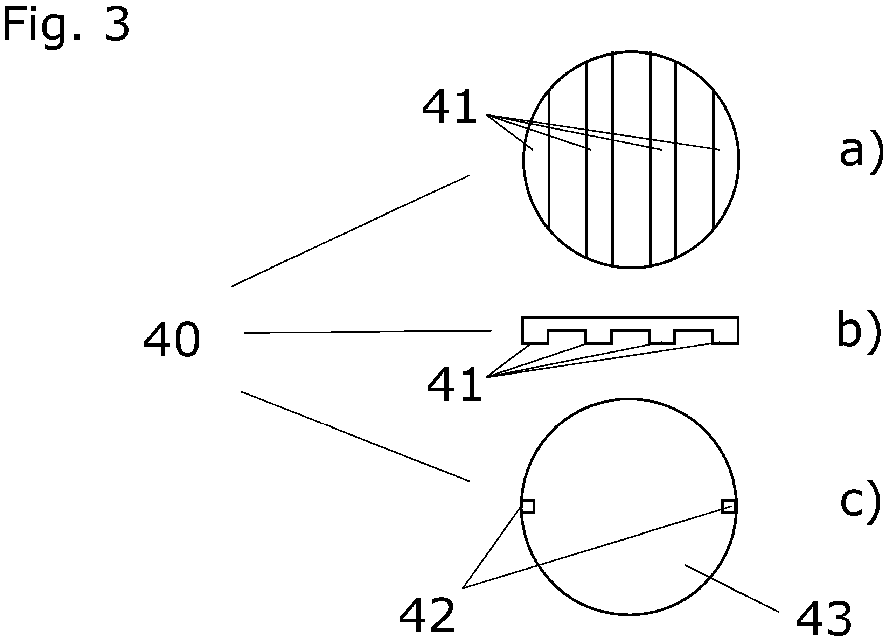

Fig. 3 zeigt drei Ansichten eines erfindungsgemäßen Koppelelements 40, wobei Fig. 3 a) eine Aufsicht auf Vorsprünge 41 einer geometrischen Struktur zeigt, und wobei Fig. 3 b) eine Seitenansicht des Koppelelements 40 zeigt, und wobei Fig. 3 c) einer Aufsicht auf eine der den Vorsprüngen 41 gegenüberliegenden Seite 43 des Koppelelements zeigt, welche Seite 43 akustisch mit dem Ultraschallsignalleiter gekoppelt ist. In die Seite 43 können Eingriffsmittel 42 eingebracht sein, über welche sich das Koppelelement anhand von mindestens einem dazu komplementären Eingriffsmittel des Gehäuses 70 oder der Haltevorrichtung 50 ausrichten lässt. Die Breiten der Vorsprünge 41 entlang einer Messrohrachse sowie deren Abstände zueinander entlang der Messrohrachse ist an Messrohreigenschaften wie beispielsweise Durchmesser, Wandstärke oder Materialbeschaffenheit angepasst, so dass in einem Arbeitswellenlängenbereich des Clamp-On-Ultraschallsensors eine effiziente Überleitung des Ultraschallsignals zwischen Koppelelement 40 und Messrohrwand 61 sichergestellt ist. Die Abstände der Vorsprünge entsprechen dabei idealerweise den Abständen von Schwingungsmaxima einer Lambwellen-Mode in der Messrohrwand 61 oder ganzzahligen Vielfachen der Abstände. Das Koppelelement kann dabei aus einem Metall, einem Kunststoff oder einer Keramik gefertigt sein.

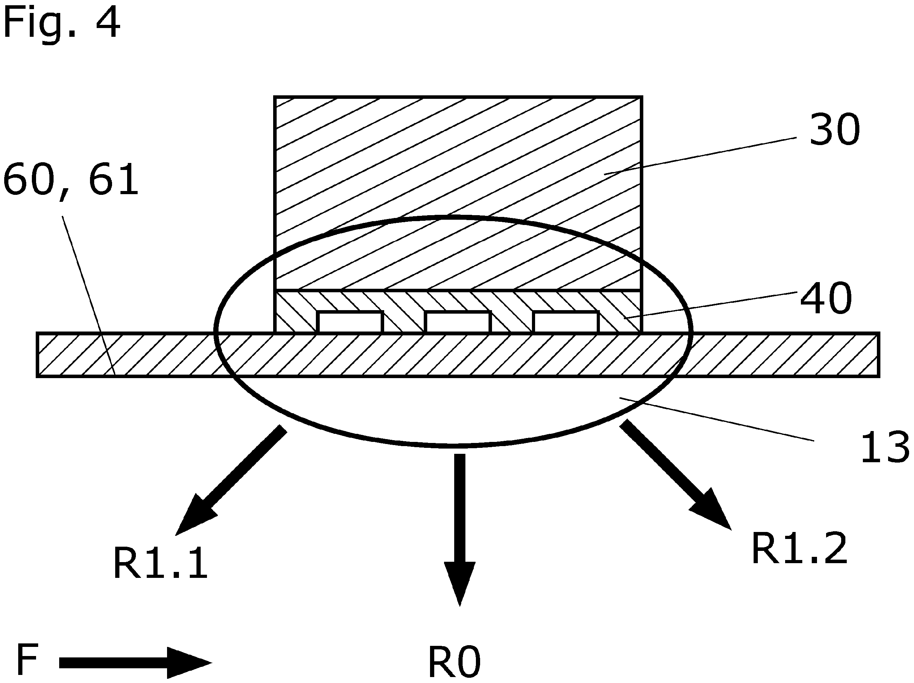

Fig. 4 skizziert schematisch die Abstrahlung des Ultraschallsignals in das Messrohr 60, wobei in einem ersten Bereich 13 der Messrohrwand durch das Koppelelement 40 mindestens eine Lambwellen-Mode ausgebildet bzw. angeregt wird. Die Anregung einer Lambwellenmode an zumindest zwei Stellen sorgt für eine Abstrahlung des Ultraschalsignals in eine Hauptabstrahlrichtung R0 senkrecht zur Messrohrwand und in mindestens zwei symmetrisch um die Hauptabstrahlrichtung angeordneten Nebenabstrahlrichtungen R1.1 und R1.2 erster Ordnung. Je nach akustischer Impedanz des Mediums und des Messrohrs können ähnlich wie bei der Beugung eines Laserstrahls an einem optischen Gitter auch weitere Nebenabstrahlrichtungen höherer Ordnungen auftreten (nicht skizziert). Zur Durchflussmessung nach dem Laufzeit- bzw. Laufzeitdifferenzen- bzw. Dopplerprinzip ist die Verwendung eines in eine Nebenabstrahlrichtung abgestrahlten Ultraschallsignalanteils notwendig. Da die Ultraschallsignalanteile, welche in Richtung der Nebenabstrahlrichtungen erster Ordnung R1.1 und R1.2 abgestrahlt werden, im Vergleich zu Ultraschallsignalanteilen, welche in Nebenabstrahlrichtungen höherer Ordnung abgestrahlt werden, höhere Intensität aufweisen, ist es von Vorteil, zur Durchflussmessung zumindest ein Ultraschallsignalanteil zu verwenden, welcher in eine der Nebenabstrahlrichtungen erster Ordnung abgestrahlt wird. Der Ultraschallsignalanteil, welcher in die Hauptabstrahlrichtung R0 abgestrahlt und an einer gegenüberliegenden Messrohrwand reflektiert wird, kann für eine Schallgeschwindigkeitsmessung verwendet werden.

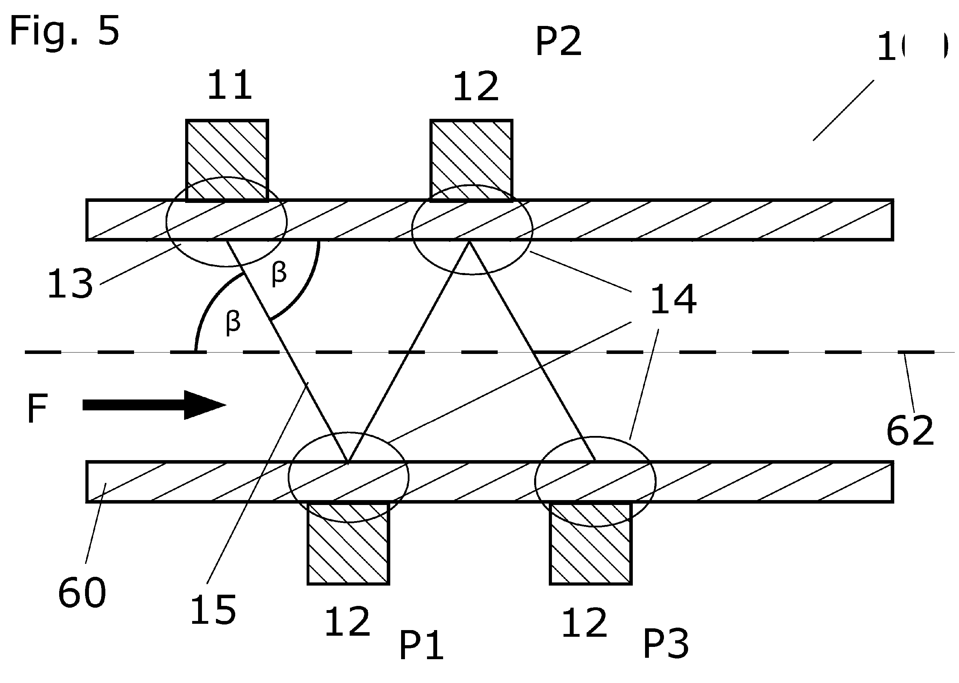

Fig. 5 zeigt einen schematischen Querschnitt durch ein Ultraschall-Durchflussmessgerät 100, welches nach dem Laufzeit- oder Laufzeitdifferenzenprinzip arbeitet, mit einem ersten erfindungsgemäßen Clamp-On-Ultraschallsensor 11 und einem zweiten erfindungsgemäßen Clamp-On-Ultraschallsensor 12, welcher auf einer gleichen oder einer zum ersten Clamp-On-Ultraschallsensor 11 gegenüberliegenden Messrohrseite angeordnet sein kann, wobei in Fig. 4 beide Positioniermöglichkeiten dargestellt sind. Der erste Clamp-On-Ultraschallsensor ist gegenüber dem zweiten Clamp-On-Ultraschallsensor 12 entlang einer Messrohrachse versetzt angeordnet, so dass ein zwischen beiden Clamp-On-Ultraschallsensoren laufendes Ultraschallsignal in oder gegen eine Strömungsrichtung eines durch das Messrohr strömenden Mediums läuft. Ein vom Wandlerelement des ersten Clamp-On-Ultraschallsensors 11 erzeugtes Ultraschallsignal regt die Ausbildung mindestens einer Lambwellen-Mode in dem ersten Bereich 13 der Messrohrwand des Messrohrs 60 an, was die Aussendung des Ultraschallsignals in das Messrohr 60 zur Folge hat. Nach Durchlaufen des Messrohrs entlang eines Signalpfads 15 regt das Ultraschallsignal in einem zweiten Bereich 14 der Messrohrwand die Ausbildung mindestens einer Lambwellen-Mode an, wodurch das Ultraschallsignal vom zweiten Clamp-On-Ultraschallsensor 12 aufgenommen und zum Wandlerelement 10 des zweiten Clamp-On-Ultraschallsensors geleitet wird. Der Signalpfad 15 des Ultraschallsignals im Messrohr weist mindestens eine Messrohrtraverse auf, wobei eine ungeradzahlige Traversenzahl im Falle eines auf der dem ersten Ultraschallsensor 11 gegenüberliegenden Seite angeordneten zweiten Ultraschallwandlers 12 beispielsweise an den Positionen P1 und P3 vorliegt, und wobei eine geradzahlige Traversenzahl im Falle eines auf der Seite des ersten Ultraschallsensors 11 angeordneten zweiten Ultraschallwandlers 12 beispielsweise an der Position P2 vorliegt. Der Signalpfad 15 muss dabei nicht auf drei Traversen beschränkt sein, so dass weitere Positionen des zweiten Ultraschallwandlers möglich sind.

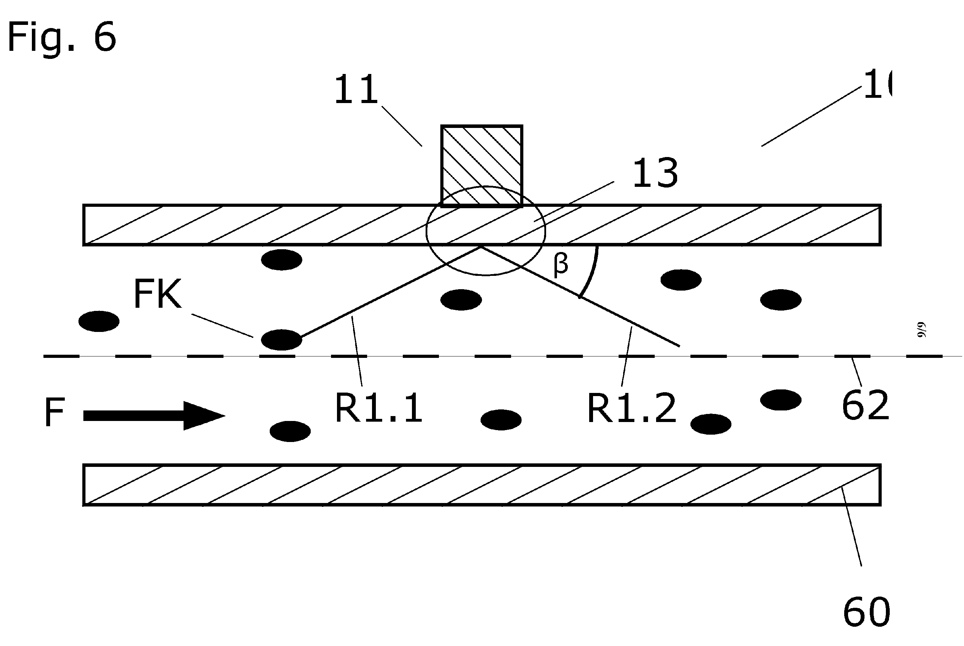

Fig. 6 zeigt einen schematischen Querschnitt durch ein Ultraschall-Durchflussmessgerät 100, welches nach dem Dopplerprinzip arbeitet, mit einem ersten erfindungsgemäßen Clamp-On-Ultraschallsensor 11. Ein vom Wandlerelement des ersten Clamp-On-Ultraschallsensors 11 erzeugtes Ultraschallsignal regt die Ausbildung mindestens einer Lambwellen-Mode in einem ersten Bereich 13 der Messrohrwand des Messrohrs 60 an, was die Aussendung des Ultraschallsignals in das Messrohr 60 zur Folge hat, wobei ein erster Ultraschallsignalanteil in die Nebenabstrahlrichtung R1.1 und ein zweiter Ultraschallsignalanteil in die Nebenabstrahlrichtung R1.2 abgestrahlt wird. Ein Fremdkörper FK im durch das Messrohr strömenden Medium, welcher vom Ultraschallsignal erfasst wird, verursacht eine Ultraschallsignalreflektion zurück in den ersten Bereich 13 und regt dort eine erneute Ausbildung einer Lambwellen-Mode an, wodurch das reflektierte Ultraschallsignal vom ersten Clamp-On-Ultraschallsensor 11 aufgenommen und zum Wandlerelement des ersten Clamp-On-Ultraschallsensors geleitet wird. Aufgrund der Strömungsgeschwindigkeit des Fremdkörpers im Medium erfährt das reflektierte Ultraschallsignal eine strömungsgeschwindigkeitsabhängige Frequenzverschiebung, wobei die Frequenzverschiebung in Richtung höherer Frequenzen im Falle eines auf den ersten Clamp-On-Ultraschallsensor 11 zuströmenden Fremdkörpers ist, und wobei die Frequenzverschiebung in Richtung tieferer Frequenzen im Falle eines vom ersten Clamp-On-Ultraschallsensor 11 wegströmenden Fremdkörpers ist. Ein in die Hauptabstrahlrichtung R0 abgestrahlter Ultraschallsignalanteil ist nicht skizziert.

### Bezugszeichenliste

- 10: Clamp-On-Ultraschallsensor
- 11: erster Clamp-On-Ultraschallsensor
- 12: zweiter Clamp-On-Ultraschallsensor
- 13: erster Bereich
- 14: zweiter Bereich
- 15: Signalpfad
- 20: Wandlerelement
- 30: Ultraschallsignalleiter
- 40: Koppelelement
- 41: Vorsprung der geometrischen Struktur
- 42: Eingriffsmittel
- 50: Haltevorrichtung
- 60: Messrohr
- 61: Messrohrwand
- 62: Messrohrachse
- 70: Gehäuse
- 71: Gehäusekammer
- 72: Federmechanismus
- 100: Ultraschall-Durchflussmessgerät
- R0: Hauptabstrahlrichtung
- R1.1 / R1.2: Nebenabstrahlrichtungen erster Ordnung.
- FK: Fremdkörper
- β: Abstrahlwinkel
- F: Flussrichtung des Mediums

## Patentansprüche

1. Clamp-On-Ultraschallsensor (10) zur Verwendung bei einem Ultraschall-Durchflussmessgerät zur Messung der Durchflussgeschwindigkeit oder des Volumendurchflusses von Medien in einem Messrohr (60), umfassend:
mindestens ein Wandlerelement (20) zum Erzeugen und/oder Detektieren von Ultraschallsignalen;
und mindestens einen akustischen Übertrager, wobei der akustische Übertrager auf einer zum Messrohr (60) gewandten Seite eine geometrische Struktur aufweist, welche dazu eingerichtet ist,
ein Ultraschallsignal im Übertrager in ein Ultraschallsignal in der Messrohrwandung (61) zu wandeln und/oder
ein Ultraschallsignal in der Messrohrwandung (61) in ein Ultraschallsignal im Übertrager zu wandeln
wobei
der akustische Übertrager mindestens einen Ultraschallsignalleiter (30) und mindestens ein Koppelelement (40) aufweist,
wobei der Ultraschallsignalleiter (30) und das Koppelement (40) lösbar mechanisch verbunden sind,
und wobei der Ultraschallsignalleiter (30) mit dem Wandlerelement (20) akustisch gekoppelt ist, und wobei das Koppelelement (40) die geometrische Struktur aufweist und dazu eingerichtet ist, mit dem Messrohr (60) akustisch gekoppelt zu werden,
wobei die geometrische Struktur mindestens zwei Vorsprünge (41) aufweist, wobei in Richtung einer Messrohrachse (62) benachbarte Vorsprünge einen Abstand zueinander aufweisen,
wobei, das Koppelelement über eine den Vorsprüngen gegenüberliegenden Seite (43) mit dem Ultraschallsignalleiter gekoppelt ist,
**dadurch gekennzeichnet, dass**
der Abstand zwischen der benachbarten Vorsprünge hinsichtlich des Wellenlängenbereichs der Ultraschallsignale und/oder hinsichtlich der Messrohrgeometrie und/oder der Materialbeschaffenheit des Messrohrs (60) zur Verbesserung der Koppeleigenschaften des Koppelelements (40) optimiert ist, und
dass der akustische Übertrager dazu eingerichtet ist, die Ultraschallsignale zwischen einer Messrohrwandung (61) und Wandlerelement (20) in der Weise zu übertragen, dass ein Ultraschallsignal in der Messrohrwandung (61) als mindestens eine Lambwellen-Mode ausgebildet ist.

2. Clamp-On-Ultraschallsensor nach Anspruch 1,
wobei der Clamp-On-Ultraschallsensor des Weiteren umfasst:
ein Gehäuse (70) mit mindestens einer Gehäusekammer (71), in welcher Gehäusekammer (71) das Wandlerelement (20) angeordnet ist.

3. Clamp-On-Ultraschallsensor nach Anspruch 1 oder 2,
wobei der Clamp-On-Ultraschallsensor des Weiteren umfasst:
eine Haltevorrichtung, welche dazu eingerichtet ist, das Gehäuse (70) beziehungsweise das Wandlerelement (20) am Messrohr (60) lösbar zu befestigen.

4. Clamp-On-Ultraschallsensor nach einem der vorigen Ansprüche,
wobei das Koppelelement (40) eine Grundfläche und eine Höhe aufweist, wobei das Quadrat der Höhe kleiner als 10% der Grundfläche ist, wobei das Quadrat der Höhe insbesondere kleiner als 5% der Grundfläche ist, und wobei das Quadrat der Höhe insbesondere kleiner als 2% der Grundfläche ist.

5. Clamp-On-Ultraschallsensor nach einem der vorherigen Ansprüche,
wobei der Kontaktbereich zwischen der geometrischen Struktur und dem Messrohr (60) im Wesentlichen einer Geraden folgt.

6. Clamp-On-Ultraschallsensor nach einem der vorigen Ansprüche,
wobei zwischen dem Koppelelement (40) und dem Messrohr (60) und/oder zwischen dem Koppelement und dem Ultraschallsignalleiter (30) und/oder zwischen dem Wandlerelement (20) und dem Ultraschallsignalleiter (30) jeweils eine Schicht angeordnet ist, welche eine angepasste Übertragungsfunktion für das Ultraschallsignal aufweist.

7. Clamp-On-Ultraschallsensor nach einem der vorherigen Ansprüche,
wobei das Koppelelement (40) am Gehäuse (70) und/oder an der Haltevorrichtung ausrichtbar ist.

8. Clamp-On-Ultraschallsensor nach einem der vorherigen Ansprüche,
wobei das Gehäuse (70) an der Haltevorrichtung ausrichtbar ist.

9. Clamp-On-Ultraschallsensor nach einem der vorherigen Ansprüche,
wobei ein Erzeugen der mindestens einen Lambwellen-Mode in der Messrohrwandung (61) eine Ultraschallsignalabstrahlung in das Messrohr verursacht, wobei die Abstrahlung mindestens eine bevorzugte Abstrahlrichtung aufweist, welche Abstrahlrichtung einen Winkel (β) kleiner als 90° und insbesondere kleiner als 70° und bevorzugt kleiner als 60° zur Messrohrachse (62) aufweist.

10. Clamp-On-Ultraschallsensor nach einem der vorigen Ansprüche,
wobei das Koppelelement (40) am Ultraschallsignalleiter (30) befestigbar und wechselbar ist; und wobei eine Befestigung mindestens ein Element aus der folgenden Liste umfasst:
Klettverbindung, lösbare Klebverbindung, Flügelmutter mit Schraubverbindung, Schnappverbindung, Rändelmutter mit Schraubverbindung, Fettverbindung oder Silikonfilm basierend auf Adhäsionskraft, Magnetverbindung.

11. Clamp-On-Ultraschallsensor nach einem der vorigen Ansprüche, wobei mindestens ein Element aus folgender Liste gegen Manipulation versiegelbar ist:
akustischer Übertrager, Wandlerelement (20), Gehäuse (70), Haltevorrichtung, Spannband, Kabel.

12. Ultraschall-Durchflussmessgerät zur Messung der Durchflussgeschwindigkeit oder dem Volumendurchfluss von Medien in einem Messrohr (60) nach dem Laufzeitdifferenzen-Messprinzip, umfassend:
ein Messrohr (60) mit einer Messrohrachse (62);
zwei erfindungsgemäße Clamp-On-Ultraschallsensoren nach mindestens einem der Ansprüche 1 bis 11, welche am Messrohr (60) angeordnet sind;
und eine Mess-/Betriebselektronik, welche dazu eingerichtet ist, die Clamp-On-Ultraschallsensoren zu betreiben.

13. Ultraschall-Durchflussmessgerät nach Anspruch 12,
wobei ein erster Clamp-On-Ultraschallsensor (11) gegenüber mindestens einem zweiten Clamp-On-Ultraschallsensor (12) entlang der Messrohrachse (62) versetzt angeordnet ist,
wobei in einem ersten/zweiten Bereich (13, 14) der Messrohrwandung (61) das Erzeugen der mindestens einen Lambwellen-Mode in der Messrohrwandung (61) durch den ersten/zweiten Clamp-On-Ultraschallsensor (11, 12) eine Ultraschallsignalabstrahlung in das Messrohr (60) verursacht, wobei die Abstrahlung mindestens eine bevorzugte Abstrahlrichtung aufweist,
wobei eine erste Abstrahlrichtung des ersten Bereichs (13) zum zweiten Bereich (14) gerichtet ist, und wobei eine erste Abstrahlrichtung des zweiten Bereichs zum ersten Bereich gerichtet ist,
wobei ein Signalpfad zwischen dem ersten Bereich und dem zweiten Bereich mindestens eine Messrohrtraverse aufweist.

14. Ultraschall-Durchflussmessgerät zur Messung der Durchflussgeschwindigkeit oder dem Volumendurchfluss von Medien in einem Messrohr (60) nach dem Doppler-Messprinzip, umfassend:
ein Messrohr (60) mit einer Messrohrachse (62);
mindestens einen erfindungsgemäßen Clamp-On-Ultraschallsensor nach mindestens einem der Ansprüche 1 bis 13, welcher am Messrohr (60) angeordnet ist;
und eine Mess-/Betriebselektronik, welche dazu eingerichtet ist, den Clamp-On-Ultraschallsensor zu betreiben,
wobei in einem ersten Bereich der Messrohrwandung (61) das Erzeugen der mindestens einen Lambwellen-Mode in der Messrohrwandung (61) durch den Clamp-On-Ultraschallsensor eine Ultraschallsignalabstrahlung in das Messrohr (60) verursacht, wobei die Abstrahlung mindestens eine bevorzugte Abstrahlrichtung aufweist.

## Claims

1. Clamp-on ultrasonic sensor (10) for use with an ultrasonic flowmeter to measure the flow velocity or the volume flow of media in a measuring tube (60), comprising:
at least a transducer element (20) designed to generate and/or detect ultrasonic signals;
and at least an acoustic transformer, wherein the acoustic transformer has a geometric structure on a side facing towards the measuring tube (60), said structure being designed to
convert an ultrasonic signal in the transformer to an ultrasonic signal in the measuring tube wall (61) and/or
convert an ultrasonic signal in the measuring tube wall (61) to an ultrasonic signal in the transformer
wherein the acoustic transformer has at least an ultrasonic signal conductor (30) and at least a coupling element (40),
wherein the ultrasonic signal conductor (30) and the coupling element (40) are mechanically connected in a detachable manner,
and wherein the ultrasonic signal conductor (30) is acoustically coupled to the transducer element (20),
and wherein the coupling element (40) has the geometric structure and is designed to be acoustically coupled to the measuring tube (60),
wherein the geometric structure has at least two projections (41), wherein
adjacent projections in the direction of a measuring tube axis (62) are spaced at a distance to one another,
wherein the coupling element is coupled with the ultrasonic signal conductor via a side (43) opposite the projections,
**characterized in that**
the distance between the adjacent projections is optimized with regard to the wavelength range of the ultrasonic signals and/or with regard to the measuring tube geometry and/or the material characteristics of the measuring tube (60) for the purpose of improving the coupling properties of the coupling element (40), and **in that** the acoustic transformer is designed to transmit the ultrasonic signals between a measuring tube wall (61) and a transducer element (20) in such a way that an ultrasonic signal is formed in the measuring tube wall (61) at least as a Lamb wave mode.

2. Clamp-on ultrasonic sensor as claimed in Claim 1,
wherein the clamp-on ultrasonic sensor further comprises:
a housing (70) with at least a housing chamber (71), wherein the transducer element (20) is arranged in said housing chamber (71).

3. Clamp-on ultrasonic sensor as claimed in Claim 1 or 2,
wherein the clamp-on ultrasonic sensor further comprises :
a retention unit, which is designed to secure the housing (70) or the transducer element (20) on the measuring tube (60) in a detachable manner.

4. Clamp-on ultrasonic sensor as claimed in one of the previous claims,
wherein the coupling element (40) has a base area and a height, wherein the square of the height is less than 10 % of the base area, wherein the square of the height is particularly less than 5 % of the base area, and wherein the square of the height is particularly less than 2 % of the base area.

5. Clamp-on ultrasonic sensor as claimed in one of the previous claims,
wherein the contact zone between the geometric structure and the measuring tube (60) essentially follows a straight line.

6. Clamp-on ultrasonic sensor as claimed in one of the previous claims,
wherein a layer is arranged between the coupling element (40) and the measuring tube (60) and/or between the coupling element and the ultrasonic signal conductor (30) and/or between the transducer element (20) and the ultrasonic signal conductor (30), said layer having an adapted transmission function for the ultrasonic signal.

7. Clamp-on ultrasonic sensor as claimed in one of the previous claims,
wherein the coupling element (40) can be aligned on the housing (70) and/or on the retention unit.

8. Clamp-on ultrasonic sensor as claimed in one of the previous claims,
wherein le housing (70) can be aligned on the retention unit.

9. Clamp-on ultrasonic sensor as claimed in one of the previous claims,
wherein the generation of the at least one Lamb wave mode in the measuring tube wall (61) causes the ultrasonic signal to radiate into the measuring tube, wherein the radiation has at least a preferred radiation direction, said radiation direction having an angle (β) less than 90° and particularly less than 70° and preferably less than 60° in relation to the measuring tube axis (62).

10. Clamp-on ultrasonic sensor as claimed in one of the previous claims,
wherein the coupling element (40) can be fixed on the ultrasonic signal conductor (40) and is exchangeable;
and wherein mounting comprises at least one element from the following list:
Velcro fastening, detachable Velcro fastening, butterfly nut with screw connection, snap connection, knurled nut with screw connection, fatty compound or silicone film based on adhesive force, magnetic connection.

11. Clamp-on ultrasonic sensor as claimed in one of the previous claims, wherein at least one element from the following list can be sealed against manipulation:
Acoustic transformer, transducer element (20), housing (70), retention unit, tensioning strap, cable.

12. Ultrasonic flowmeter designed to measure the flow velocity or the volume flow of media in a measuring tube (60) according to the principle of transit time difference, comprising:
a measuring tube (60) with a measuring tube axis (62) ;
two clamp-on ultrasonic sensors according to the invention as claimed in at least one of the Claims 1 to 11, said sensors being arranged on the measuring tube (60);
and a measuring/operating electronics unit, which is designed to operate the clamp-on ultrasonic sensors.

13. Ultrasonic flowmeter as claimed in Claim 12,
wherein a first clamp-on ultrasonic sensor (11) is arranged along the measuring tube axis (62) in an offset manner in relation to at least a second clamp-on ultrasonic sensor (12),
wherein, in a first/second zone (13, 14) of the measuring tube wall (61), the generation of the at least one Lamb wave mode in the measuring tube wall (61) by the first/second clamp-on ultrasonic sensor (11, 12) causes the ultrasonic signal to radiate into the measuring tube (60), wherein the radiation has at least a preferred radiation direction,
wherein a first radiation direction of the first zone (13) is directed towards the second zone (14), and a first radiation direction of the second zone is directed towards the first zone,
wherein a signal path between the first zone and the second zone has at least a measuring tube traverse.

14. Ultrasonic flowmeter designed to measure the flow velocity or the volume flow of media in a measuring tube (60) according to the Doppler measuring principle, comprising:
a measuring tube (60) with a measuring tube axis (62);
at least un clamp-on ultrasonic sensor, according to the invention, as claimed in at least one of the Claims 1 to 13, said sensor being arranged on the measuring tube (60);
and a measuring/operating electronics unit, said electronics unit being designed to operate the clamp-on ultrasonic sensor,
wherein in a first zone of the measuring tube wall (61), the generation of the at least one Lamb wave mode in the measuring tube wall (61) by the clamp-on ultrasonic sensor causes the ultrasonic signal to radiate into the measuring tube (60), wherein the radiation has at least a preferred radiation direction.

## Revendications

1. Capteur à ultrasons de type clamp-on (10) destiné à une utilisation avec un débitmètre à ultrasons pour la mesure de la vitesse d'écoulement ou du débit volumique de produits dans un tube de mesure (60), comprenant :
au moins un élément de transducteur (20) destiné à la génération et/ou la détection de signaux à ultrasons ;
et au moins un transmetteur acoustique, le transmetteur acoustique présentant sur un côté tourné vers le tube de mesure (60) une structure géométrique,
laquelle structure est conçue pour
convertir un signal ultrasonore dans le transmetteur en un signal ultrasonore dans la paroi de tube de mesure (61) et/ou
convertir un signal ultrasonore dans la paroi de tube de mesure (61) en un signal ultrasonore dans le transmetteur
le transmetteur acoustique comportant au moins un conducteur de signal ultrasonore (30) et au moins un élément de couplage (40),
le conducteur de signal ultrasonore (30) et l'élément de couplage (40) étant reliés par une liaison mécanique amovible,
et le conducteur de signal ultrasonore (30) étant relié acoustiquement avec l'élément de transducteur (20),
et l'élément de couplage (40) présentant la structure géométrique et étant conçu pour être couplé acoustiquement avec le tube de mesure (60),
la structure géométrique présentant au moins deux saillies (41), les saillies adjacentes étant espacées l'une par rapport à l'autre en direction d'un axe de tube de mesure (62),
l'élément de couplage étant couplé avec le conducteur de signal ultrasonore sur un côté (43) opposé aux saillies,
**caractérisé**
**en ce que** la distance entre les saillies adjacentes est optimisée - en vue de l'amélioration des propriétés de couplage de l'élément de couplage (40) - concernant la plage de longueur d'onde des signaux ultrasonores et/ou concernant la géométrie de tube de mesure et/ou la structure du matériau du tube de mesure (60), et
**en ce que** le transmetteur acoustique est conçu pour transmettre les signaux ultrasonores entre une paroi de tube de mesure (61) et un élément de transducteur (20) de telle sorte qu'un signal ultrasonore soit constitué dans la paroi de tube de mesure (61) au moins en tant qu'un mode d'ondes de Lamb.

2. Capteur à ultrasons de type clamp-on selon la revendication 1,
pour lequel le capteur à ultrasons de type clamp-on comprend en outre :
un boîtier (70) avec au moins une chambre de boîtier (71), chambre de boîtier (71) dans laquelle est disposé l'élément de transducteur (20).

3. Capteur à ultrasons de type clamp-on selon la revendication 1 ou 2,
pour lequel le capteur à ultrasons de type clamp-on comprend en outre :
un dispositif de retenue, lequel dispositif est conçu pour fixer de façon amovible le boîtier (70) ou l'élément de transducteur (20) sur le tube de mesure (60).

4. Capteur à ultrasons de type clamp-on selon l'une des revendications précédentes,
pour lequel l'élément de couplage (40) présente une base et une hauteur, le carré de la hauteur étant inférieur à 10 % de la base, le carré de la hauteur étant notamment inférieur à 5 % de la base, et le carré de la hauteur étant notamment inférieur à 2 % de la base.

5. Capteur à ultrasons de type clamp-on selon l'une des revendications précédentes,
pour lequel la zone de contact entre la structure géométrique et le tube de mesure (60) suit pour l'essentiel une droite.

6. Capteur à ultrasons de type clamp-on selon l'une des revendications précédentes,
pour lequel est disposée, entre l'élément de couplage (40) et le tube de mesure (60) et/ou entre l'élément de couplage et le conducteur de signal ultrasonore (30) et/ou entre l'élément de transducteur (20) et le conducteur de signal ultrasonore (30) respectivement une couche, laquelle couche présente une fonction de transmission adaptée pour le signal ultrasonore.

7. Capteur à ultrasons de type clamp-on selon l'une des revendications précédentes,
pour lequel l'élément de couplage (40) peut être aligné sur le boîtier (70) et sur le dispositif de retenue.

8. Capteur à ultrasons de type clamp-on selon l'une des revendications précédentes,
pour lequel le boîtier (70) peut être aligné sur le dispositif de retenue.

9. Capteur à ultrasons de type clamp-on selon l'une des revendications précédentes,
pour lequel une génération de l'au moins un mode d'ondes de Lamb dans la paroi de tube de mesure (61) provoque un rayonnement du signal ultrasonore dans le tube de mesure, le rayonnement présentant au moins une direction de rayonnement préférentielle, laquelle direction de rayonnement présente un angle
(β) inférieur à 90° et notamment inférieur à 70° et de préférence inférieur à 60° par rapport à l'axe de tube de mesure (62).

10. Capteur à ultrasons de type clamp-on selon l'une des revendications précédentes,
pour lequel l'élément de couplage (40) peut être fixé sur le conducteur de signal ultrasonore (40) et est interchangeable ;
et pour lequel une fixation comprend au moins un élément de la liste suivante :
Liaison par Velcro, liaison par Velcro amovible, écrou à oreilles avec liaison filetée, liaison par encliquetage, écrou moleté avec liaison filetée, graisse ou film silicone basé sur une force adhésive, liaison magnétique.

11. Capteur à ultrasons de type clamp-on selon l'une des revendications précédentes, pour lequel au moins un élément de la liste suivante peut être scellé contre une manipulation :
Transmetteur acoustique, élément de transducteur (20), boîtier (70), dispositif de retenue, bande de serrage, câble.

12. Débitmètre à ultrasons destiné à la mesure de la vitesse d'écoulement ou du débit volumique de produits dans un tube de mesure (60) d'après le principe de la différence des temps de transit, comprenant :
un tube de mesure (60) avec un axe de tube de mesure (62) ;
deux capteurs à ultrasons de type clamp-onde conformes à l'invention, selon au moins l'une des revendications 1 à 11, lesquels capteurs sont disposés sur le tube de mesure (60) ;
et une électronique de mesure / d'exploitation, laquelle électronique est conçue pour exploiter les capteurs à ultrasons de type clamp-on.

13. Débitmètre à ultrasons selon la revendication 12,
pour lequel un premier capteur à ultrasons de type clamp-on (11) est disposé de manière décalée en face d'au moins un deuxième capteur à ultrasons de type clamp-on (12) le long de l'axe de tube de mesure (62),
pour lequel, dans une première / deuxième zone (13, 14) de la paroi de tube de mesure (61), la génération de l'au moins un mode d'ondes de Lamb dans la paroi de tube de mesure (61) à travers le premier / deuxième capteur à ultrasons de type clamp-on (11, 12) provoque un rayonnement de signal ultrasonore dans le tube de mesure (60), le rayonnement présentant au moins une direction de rayonnement préférentielle,
une première direction de rayonnement de la première zone (13) étant dirigée vers la deuxième zone (14), et une première direction de rayonnement de la deuxième zone étant dirigée vers la première zone,
un trajet de signal présentant entre la première zone et la deuxième zone au moins une traverse de tube de mesure.

14. Débitmètre à ultrasons destiné à la mesure de la vitesse d'écoulement ou du débit volumique de produits dans un tube de mesure (60) d'après le principe de mesure Doppler, comprenant :
un tube de mesure (60) avec un axe de tube de mesure (62) ;
au moins un capteur à ultrasons de type clamp-on conforme à l'invention, selon au moins l'une des revendications 1 à 13, lequel capteur est disposé sur le tube de mesure (60) ;
et une électronique de mesure / d'exploitation, laquelle électronique est conçue pour exploiter le capteur à ultrasons de type clamp-on,
débitmètre pour lequel, dans une première zone de la paroi de tube de mesure (61), la génération de l'au moins un mode d'ondes de Lamb dans la paroi de tube de mesure (61) provoque par le biais du capteur à ultrasons de type clamp-on un rayonnement du signal ultrasonore dans le tube de mesure (60), le rayonnement présentant au moins une direction de rayonnement préférentielle.
